# EUROPEAN PATENT APPLICATION

(11) **EP 3 264 041 A1**
(43) Date of publication of application: **03.01.2018**
(21) Application number: 16176616.7
(22) Date of filing: 28.06.2016
(51) Int. Cl.: G01C 21/20, G01C 21/36

(54) **NAVIGATION SYSTEM AND METHOD**

(71) Applicant: Lee, Yim Mai Amy, Tseung Kwan O (HK)
(72) Inventor: Lee, Yim Mai Amy, Tseung Kwan O (HK); Pun, Ho Shing Billy, Tseung Kwan O (HK)
(74) Representative: Gulde & Partner

(57) **Abstract**

The present application is directed to a navigation system and method. The system includes a connection setup located at a predetermined place. The connection setup provides different data links by means of an electronic display screen. The connection setup determines a current location of a receiving setup engaged with the connection setup, determines a destination location requested by the receiving setup according to an operation performed by the receiving setup on the data link, and plans at least one navigation path according to the current location of and the destination location requested by the receiving setup. The navigation path includes multiple navigation checkpoints; and the connection setup provides data of the navigation path to the receiving setup engaged with the connection setup. The patent application provides a navigation system and method which is convenient, simple and has a cost-effectives benefit.

## Description

### TECHNICAL FIELD

This patent application relates to a navigation system and method.

### BACKGROUND

In the field of self-positioning and destination locating, two methods are generally used currently:
1. In an exterior positioning aspect, a global positioning system (GPS) is generally depended on. However, when receiving a GPS system signal, a GPS setup has its own limitation. For example, on a narrow street in a city that has dense tall buildings and large mansions, or at a place at which overpasses are fully distributed, a GPS signal generally cannot provide a reliable and accurate positioning and navigation service because of severe hindrance; in these cases, events such as inaccurate positioning and navigation dysfunction often occur. Moreover, a GPS signal is weak or even no signal can be obtained in an enclosed architecture, for example, a site such as a subway station, a large mall or an exhibition hall, so it is difficult for GPS to normally operate at these sites.
2. In an interior positioning aspect, several hundreds of, or even more than a thousand of dedicated Wi-Fi hotspot setups, Bluetooth Beacon setups or VLC (Visible Light Communication) setups used for positioning calculation are generally installed in an architecture densely. However, all these setups need to be installed at cost of a large quantity of manpower, time and money, but effects are generally not ideal. Because of factors such as an effective signal coverage area, a signal blind spot and interference to signal (notes: VLC light signal is not included because visible light is not interfered), inaccurate positioning and navigation are caused. Moreover, because Wi-Fi hotspot, Bluetooth Beacon or VLC setups are used, there is a problem of privacy exposure. Furthermore, the bigger the architecture is, the higher the costs are because more Wi-Fi hotspot, Bluetooth Beacon or VLC setups need to be installed.

Moreover, if a user intends to navigate from an interior place to an exterior dedicated place and further needs to pass through multiple underground tunnels on the way, for example, from a lobby of a subway station to a dedicated place on the ground, no effective solution can be found by means of current technologies. Because two sets of independent positioning system signals are involved, it is quite difficult to implement seamless handover in operation. It is still necessary to further improve a conventional method for positioning and destination locating.

### SUMMARY

A technical problem to be solved by this patent application is to provide an improved navigation system and navigation method for the foregoing defects in the prior art.

The present application provides a navigation system, comprising: a connection setup located at a predetermined place, wherein the connection setup provides different data links by means of an electronic display screen; the connection setup determines a current location of a receiving setup engaged with the connection setup, determines a destination location requested by the receiving setup according to an operation performed by the receiving setup on the data link, and plans at least one navigation path according to the current location of and the destination location requested by the receiving setup, wherein the navigation path comprises multiple navigation checkpoints; and the connection setup provides data of the navigation path to the receiving setup engaged with the connection setup.

In an embodiment, the location comprises an interior location or an exterior location.

In an embodiment, the operation performed by the receiving setup on the data link comprises: touching the display screen, tapping on the display screen, and scanning a QR-code on the display screen.

In an embodiment, the connection setup comprises at least one of a QR-code, a near field communication setup, a visible light communication setup, and an ultra-sound communication setup.

In an embodiment, a data link of a connection setup includes a place on a map, a coupon, a photo, a video or a 360-degree panoramic scene.

In an embodiment, one or more near field communication sensors are set at any location at the back of the display screen of the connection setup, so as to allow triggering by the receiving setup having a near field communication controller.

In an embodiment, the display screen is a curved surface ultra-thin non-touch display screen.

In an embodiment, the navigation path comprises a map or a perspective view of an architecture interior, or a map or a perspective view from the interior to an exterior.

The present application provides a navigation method, comprising the following steps: setting a connection setup at a predetermined place, wherein the connection setup provides different data links by means of an electronic display screen; determining, by the connection setup, a current location of a receiving setup engaged with the connection setup, determining a destination location requested by the receiving setup according to an operation performed by the receiving setup on the data link, and planning at least one navigation path according to the current location of and the destination location requested by the receiving setup, wherein the navigation path comprises multiple navigation checkpoints; and providing, by the connection setup, data of the navigation path to the receiving setup engaged with the connection setup.

This patent application provides a navigation system and method. While this patent application is convenient, simple and has a cost-effective benefit, this patent application can also meet requirements that facilitate various aspects of a user to the most extent. For example, needed information is portable, and personal privacy is not exposed.

This patent application provides wireless navigation via a mobile setup of the user, which greatly improves shopping experience of the user in a site of a considerable scale. Moreover, this patent application may further provide a large quantity of value-added services to the user, for example, digital advertisement, coupon downloading, real-time release, reservation, commodity preview, order rationing and real-time transaction.

### BRIEF DESCRIPTION OF THE DRAWINGS

This patent application is further described below with reference to accompanying drawings and embodiments. In the accompanying drawings:
FIG. 1 is a basic flowchart according to an embodiment of this patent application;
FIG. 2 is a system frame diagram according to an embodiment of this patent application;
FIG. 3 is a working flowchart according to an embodiment of this patent application;
FIG. 4A to FIG. 4C are a working flowchart of Design A according to an embodiment of this patent application;
FIG. 5A to FIG. 5C are a working flowchart of Design B according to an embodiment of this patent application;
FIG. 6A to FIG. 6C are a working flowchart of Design C according to an embodiment of this patent application;
FIG. 7A to FIG. 7C are a working flowchart of Design D according to an embodiment of this patent application;
FIG. 8A to FIG. 8C are a working flowchart of Design E according to an embodiment of this patent application;
FIG. 9 is a profile drawing of a curved surface ultra-thin large display screen according to an embodiment of this patent application; and
FIG. 10 is a schematic diagram of a navigation path and checkpoints according to an embodiment of this patent application.

### DETAILED DESCRIPTION

To make the objectives, technical solutions, and advantages of this patent application more comprehensible, this patent application is further described in detail as follows with reference to the accompanying drawings and embodiment. It should be understood that the specific embodiment is only used to explain this patent application and is not intended to limit this patent application.

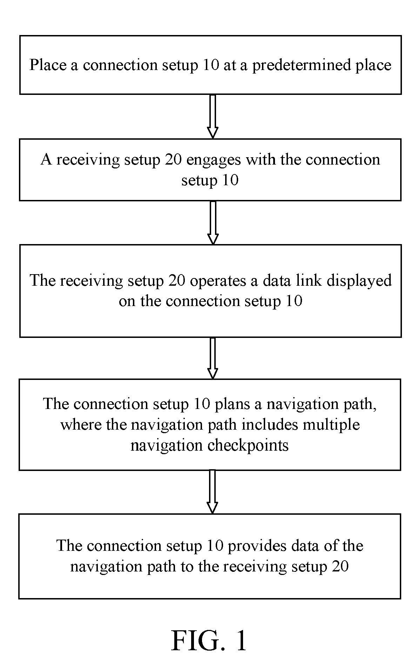

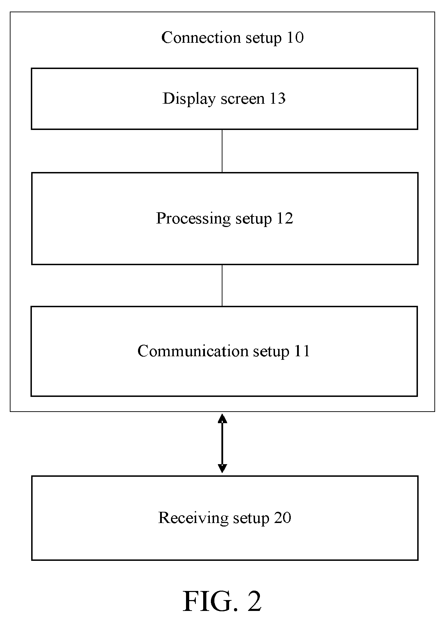

As shown in FIG. 1 and FIG. 2, in this application, a system-side connection setup 10 and a user-side receiving setup 20 are mainly included. The connection setup 10 is an electronic map information kiosk system (electronic map system for short) integrated with functions such as self-positioning, locating a destination location and navigating to a destination, and may be placed at one or more predetermined places, for example, different entries and stairs of a large shopping mall. Hardware configurations of the connection setup 10 mainly include:
a processing setup 12, which may be a microprocessor integrated inside the connection setup 10, or may be an individual external computer, where the processing setup 12 is a working core of the connection setup 10, and completes various functions such as data processing and calculation of the connection setup 10;
a display screen 13, which may or may not be provided with a touch function, where the connection setup 10 is generally presented to the public, and therefore the display screen 13 is generally a large display screen; moreover, the display screen 13 may be a flat display screen or a curved surface display screen; or a conventional display screen or an ultra-thin display screen; and
a communication setup 11, which is a unit used for external communication, where in one connection setup 10, one or more communication setups may be configured, for example, a QR-code, a visible light communication setup, an ultra-sound communication setup, and a near field communication (NFC) setup.

The receiving setup 20 is a user-side device and is generally carried by a user, and may be engaged with the connection setup 10, to perform data exchange. The receiving setup 20 may be a mobile device (also referred to as a mobile setup), such as a smartphone or a tablet operated with an iOS system or an android system. Corresponding to the communication setup 11 of the connection setup 10, the receiving setup 20 may complete operations such as QR-code reading, visible light communication data receiving/transmitting, ultra-sound communication data receiving/transmitting, and near field communication data receiving/transmitting.

Obviously, as receiving and transmitting parties, one or more transmitters and receivers may be configured for the connection setup 10 and the receiving setup 20 to implement data receiving or sending in a corresponding communication manner. However, generally, in consideration of portability and applicability of the receiving setup 20, a receiver of a dedicated communication manner is generally disposed on the receiving setup 20, and a transmitter of a dedicated communication manner is disposed on the connection setup 10. For example, in near field communication, a passive communication mode may be used, i.e., the connection setup 10 is used as a master device, provides a radio frequency field in an entire communication process, and sends data to the receiving setup 20; and the receiving setup 20 is used as a slave device, does not need to generate a radio frequency field, but sends data back to the connection setup 10 by using only a load modulation technology. On the other hand, an active communication mode may also be used, i.e., devices on two sides may both initiate communication, which is particularly applicable to design E mentioned below.

A map may be displayed on the display screen 13, one or more signs may be placed beside the map, such as a business logo, a category icon, an art design pattern, a product photo, a video or a plain text. Places on the map and these signs may be set to be interactive, that is, may interact with the receiving setup 20 engaged with the connection setup 10 to provide data. Herein, signs of these pieces of exchangeable data on the display screen are referred to as data links. That is, when performing a dedicated operation on a particular data link, the receiving setup 20 may implement corresponding data exchange with such a data link. The connection setup 10 has multiple different data links.

After the receiving setup 20 is engaged with a particular connection setup 10, the connection setup 10 may determine the current location of the receiving setup 20 via the connection, which is due to a reason that in this application, connection of the connection setup 10 and of the receiving setup 20 is completed at a nearby place, i.e., the receiving setup 20 is already near the connection setup 10, and performs an operation such as touching or tapping on the connection setup 10. Therefore, the connection setup 10 may directly use its own location as the current location of the receiving setup 20. The current location of the receiving setup 20 does not need to be positioned in other complex positioning manners.

Further, the connection setup 10 determines a destination location requested by the receiving setup 20 according to an operation performed by the receiving setup 20 on the data link. When a user, i.e., a carrier of the receiving setup 20, needs to go to a dedicated place, the user may locate the dedicated place on the map on the display screen 13. Once the dedicated place is located, the user may correspondingly touch or scan the dedicated place, or tap on the dedicated place. As described above, the dedicated place is a dedicated data link. An operation of the user such as touching, scanning or tapping is equivalent to requesting the data link, and therefore the connection setup 10 may determine the destination location requested by the user according to the operation of the user.

Once the current location of and the destination location requested by the receiving setup 20 are determined, the connection setup 10 may plan one or more navigation paths, so as to indicate how can the user go to the destination location from the current location. Then, the connection setup 10 may provide the navigation path to the receiving setup 20. The user may go to the destination by means of guidance of the navigation path on the receiving setup of the user.

In summary, based on a navigation system shown in FIG. 2, a navigation method of an embodiment of this application is shown in FIG. 1, and mainly includes:
providing a connection setup at a predetermined place, where the connection setup provides different data links by means of an electronic display screen;
determining, by the connection setup, a current location of a receiving setup engaged with the connection setup, determining a destination location requested by the receiving setup according to an operation performed by the receiving setup on the data link, and planning at least one navigation path according to the current location of and the destination location requested by the receiving setup, where the navigation path includes multiple navigation checkpoints; and
providing, by the connection setup, data of the navigation path to the receiving setup engaged with the connection setup.

It can be understood that, when two sets of connection setup whose appearances seem the same are placed at two predetermined places far away from each other, for example, at a same subway station, one connection setup is placed at an easternmost exit location, and the other connection setup is placed at a westernmost exit location, even if the user makes a same action, indicated paths about how to reach the destination are not the same, and the connection setup may automatically plan one or more proper (for example, one with the shortest journey) navigation paths according to the current location of the user and the destination location requested by the user.

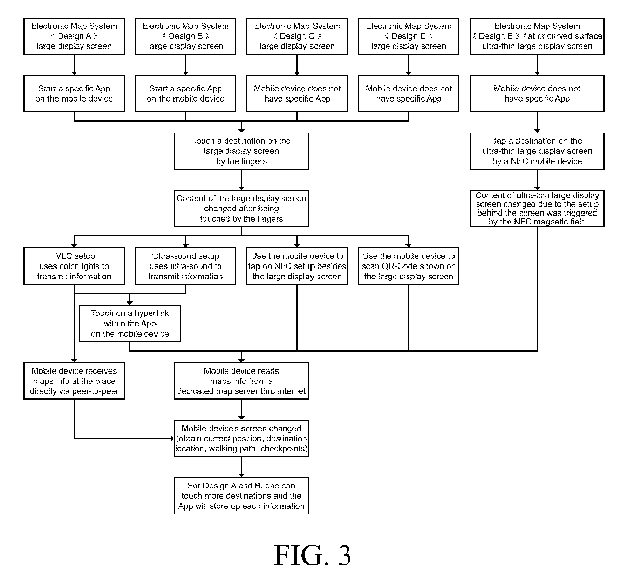

Referring to FIG. 3, FIG. 4A to FIG. 4C, FIG. 5A to FIG. 5C, FIG. 6A to FIG. 6C, FIG. 7A to FIG. 7C, and FIG. 8A to FIG. 8C, the connection setup of this embodiment of this application may be designed in multiple manners as follows:
A) Run, Touch & Go, that is, run an application program on a mobile device, touch a symbol on the display screen of the connection setup, for example, an intended destination, and go.

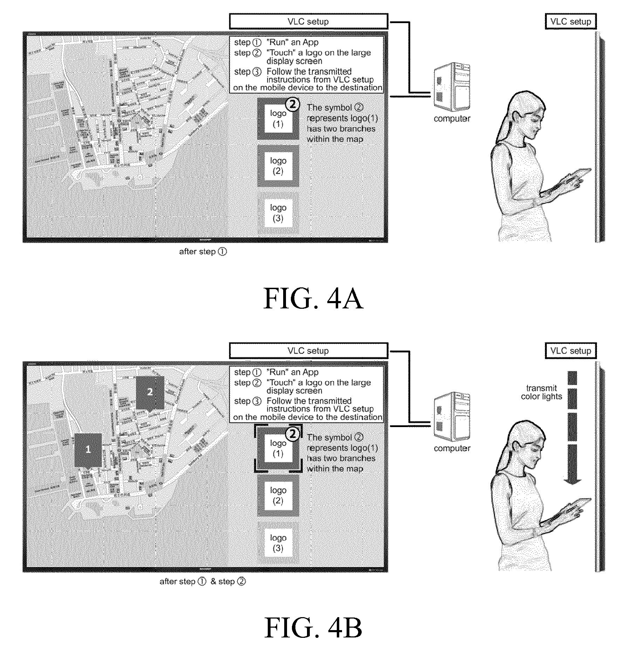

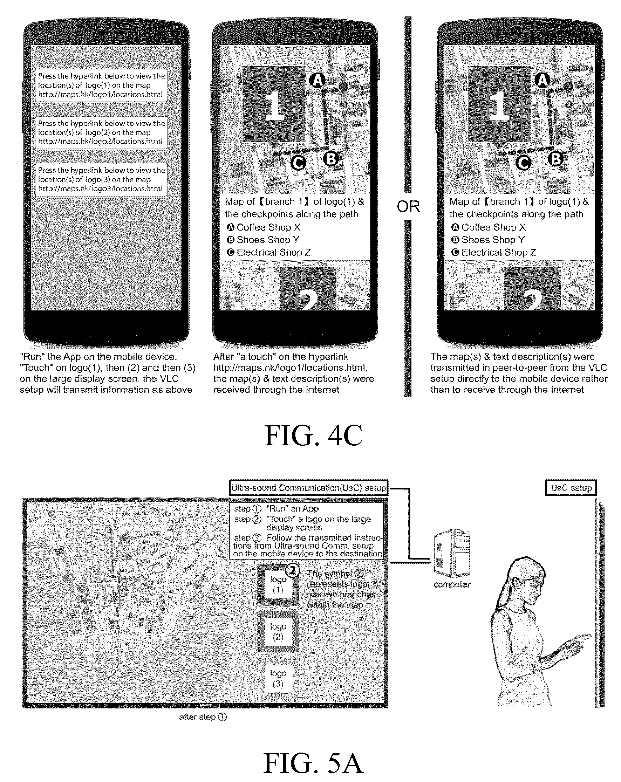

As shown in FIG. 4A to FIG. 4C, in this manner, VLC may be used for positioning and providing a destination location and navigation. This manner is applicable to a scenario in which a start point is an interior environment, for example, a subway station, an airport lounge or a large shopping mall, because sunlight irradiation affects a light signal transmitted by the VLC communication setup. Additionally, this technology is particularly applicable to hospitals because light signal of the transmitted visible light does not affect operations of medical treatment setups of the hospitals.

A visible light communication principle uses a specially-made light emitting diode to transmit high-speed twinkling light invisible to a naked eye in air. When a lamp is on, it represents 1, and when the lamp is off, it represents 0. In this way, data transfer can be performed by using a binary method. The high-speed twinkling light which expresses information is obtained by a camera or a light sensor of the mobile device, and the information is decoded to obtain data transferred by the information. Depending on a twinkling frequency of the lamp, the visible light communication may transfer data at a speed of 40 MB/s or up to 100 GB/s, and therefore, map and text description about positioning and navigation information may be obtained in less than one second, and be directly transferred to the mobile device on the scene in a peer-to-peer manner without need of the Internet. On the other hand, only a website address may be transferred to the receiving setup, and the receiving setup acquires map information from a dedicated map server on the Internet based on the website address.

### B) Run, Touch & Go

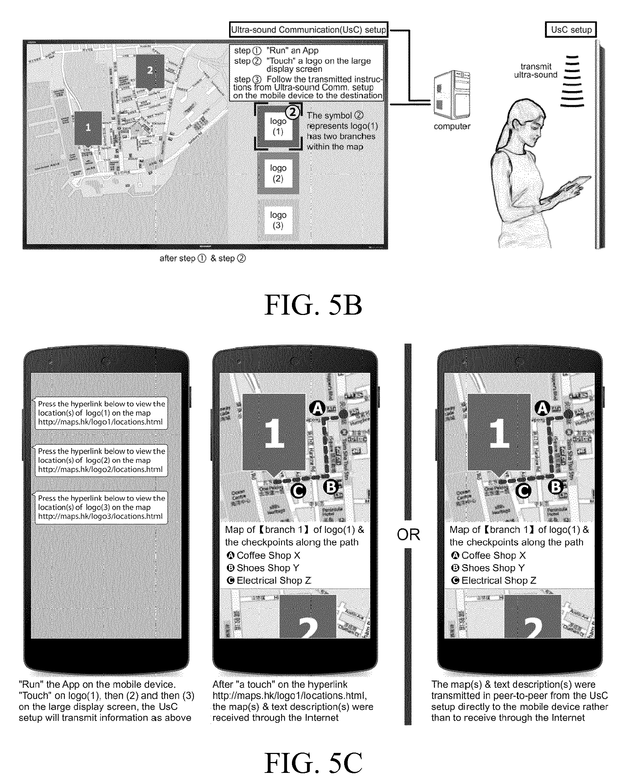

As shown in FIG. 5A to FIG. 5C, in this manner, ultra-sound communication is used for positioning and providing a destination location and navigation, which is applicable to a scenario in which a start point is an exterior environment, for example, a large theme park, or a bus station.

Generally, a human ear can hear an audio frequency from about 20 Hz to 20 KHz. Any audio frequency lower than 20 Hz or higher than 20 KHz is a frequency inaudible to most of human ears, that is, the so-called ultrasonic wave.

The mobile device can transmit or detect an audio frequency from 20 Hz to 20 KHz inaudible to human ears. By means of a dedicated ultra-sound communication setup, or by using a speaker of the mobile device in cooperation with particularly designed software as an ultra-sound transmitting setup; similar to the visible light communication in design A, communication between the receiving setup and the connection setup may be implemented likewise.

### C) Touch, Tap & Go

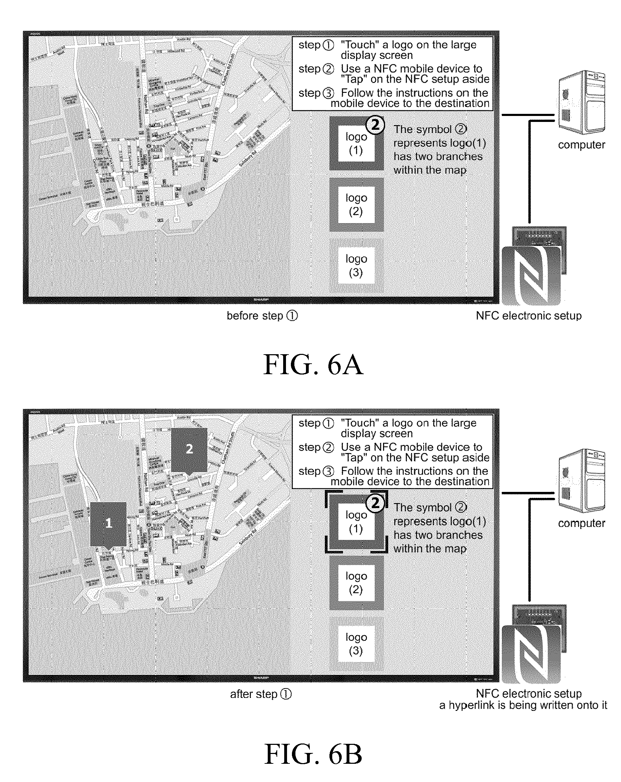

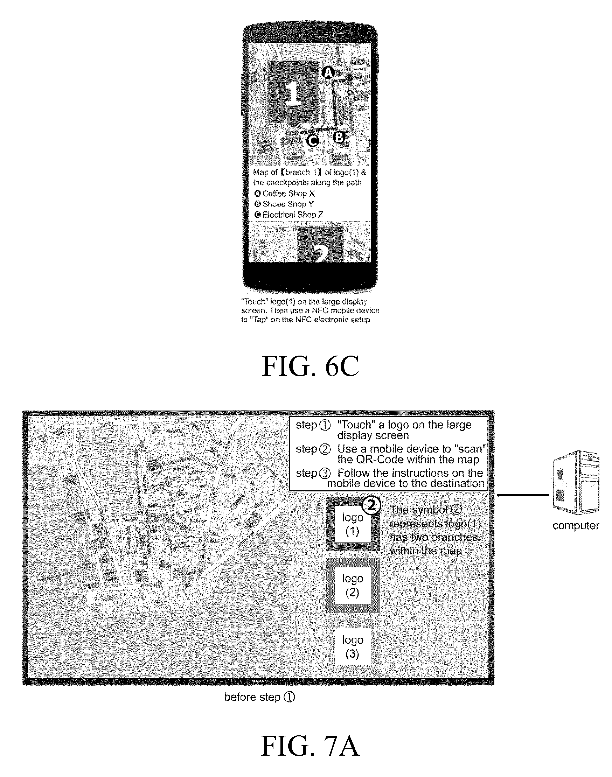

As shown in FIG. 6A to FIG. 6C, in this manner, near field communication is used for positioning and providing a destination location and navigation, which is applicable to a place with high popularity of near field communication. "Touch once" a business logo (1) on a large display screen, and all branches are shown. As long as the user "taps once" the mobile device on an NFC electronic setup beside the display screen, the user can obtain map and text description information of positioning, a destination location (one or more places) and navigation from the Internet.

### D) Touch, Scan & Go

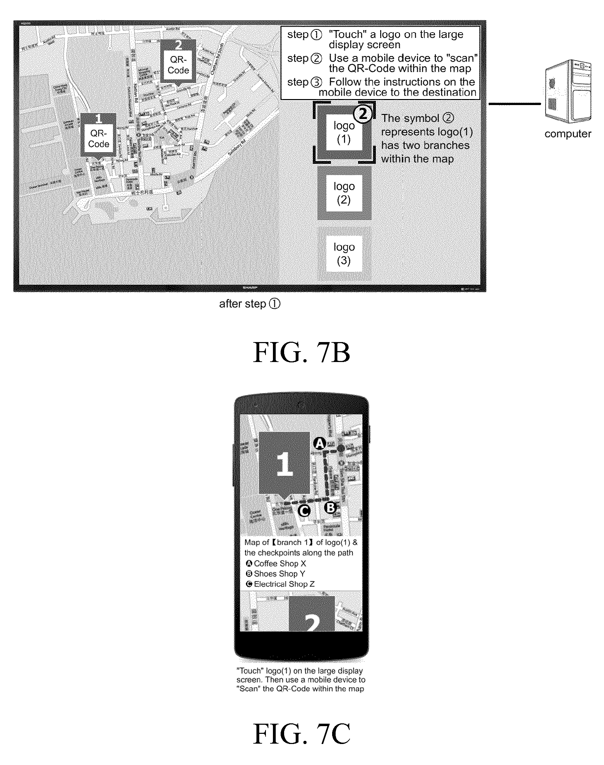

As shown in FIG. 7A to FIG. 7C, in this manner, a QR-code is used for positioning and providing a destination location and navigation, which is applicable to any case. "Touch once" a business logo (1) on a large display screen, and all branches are shown. As long as the user "scans once" a QR-code on a map by using the mobile device, the user can obtain map and text description information of positioning, a destination location (one or more places) and navigation from the Internet.

### E) Just only Tap & Go

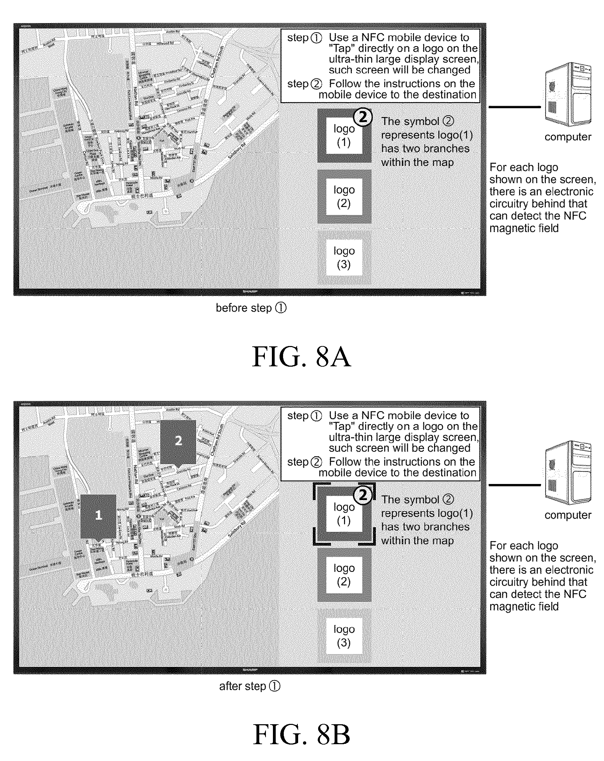

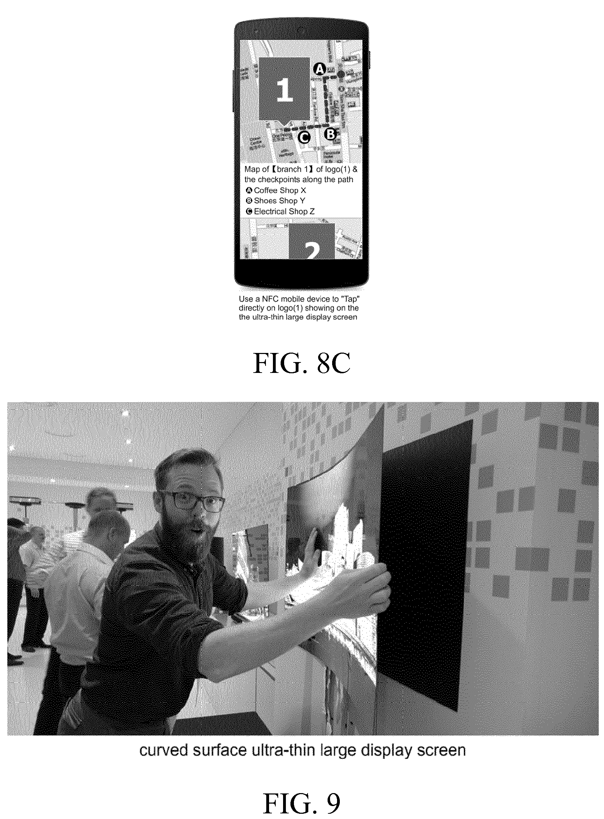

As shown in FIG. 8A to FIG. 8C, in this manner, near field communication provided with a controller is used for positioning and providing a destination location and navigation, which is applicable to a place with high popularity of near field communication. The user "directly" "taps once" an NFC mobile device having a controller (that is, the NFC mobile device may be used as an NFC master device to transmit an NFC magnetic field) on a business logo (1) "displayed" on a flat or curved surface ultra-thin large display screen , an NFC electronic setup added at the back of the display screen is triggered by the NFC magnetic field, and the large display screen changes so that all branches are shown. Meanwhile, a small display screen (that is, the display screen of the mobile device) will also change, and the mobile device obtains map and text description information of positioning, a destination location (one or more places) and navigation from the Internet.

Referring to FIG. 3, design A to design E share some common features, yet also have their respective particularities. Specifically, by using design A and design B as an example, a dedicated application program needs to be installed in advance on the mobile device of the user for receiving map information. On the other hand, in design C, design D, and design E, no application programs need to be installed on the mobile device.

By using design A, design B, design C, and design D as an example, for the user, a first performed input action is to touch a destination on the large display screen by using a finger; when the large display screen is touched by the finger, and the screen changes correspondingly. However, in design E, "tapping once" on a destination on the ultra-thin large display screen by using the mobile device provided with an NFC function is used as an input action. Although the user does not use a finger to touch the ultra-thin large display screen, because a sensor that can detect an NFC magnetic field is installed at the back of each destination symbol on the display screen, this action of "tapping once" is actually similar to touching once on the ultra-thin large display screen, but substantially does not perform any contact and only performs an "input" action without physical contact. Therefore, design E actually does not require the display screen to be provided with a touch function. The large display screen is triggered by the NFC magnetic field, and therefore, the screen changes correspondingly. The change of the screen is, for example, that a location of the user, a location of one or more nearby branches, or a path is shown on the map.

By using design A, design B, design C, and design D as an example, in addition to changing display content on the display screen, a first action, i.e., "touch ", also makes
a) the visible light communication setup send information, where there may be two forms of information, where one form is to transmit an Internet address, and the other form is to directly send a series of maps plus text description (navigation path);
b) the ultra-sound communication setup send information, where there may be two forms of information, where one form is to transmit an Internet address, and the other form is to directly send a series of maps plus text description (navigation path);
c) the NFC setup installed beside the display screen be written with an Internet address that can be understood and read by the mobile device provided with the NFC function; and
d) a QR-code loaded with the Internet address be displayed on the display screen.

If only an Internet address is sent, it is necessary to "press a website address in an application program of the mobile device once", so as to read data such as a map or a path from a dedicated map server on the Internet. If a series of maps plus text description information are sent, it is denoted that information is directly transferred on the scene in a peer-to-peer manner, and does not need to be extracted through a dedicated map server on the Internet.

Finally, the screen on the display screen of the mobile device changes. In this case, information such as positioning, a destination location, a path, or a checkpoint is acquired.

Because both design A and design B use an application program, repeating "the first action" makes the application program record an Internet address corresponding to a destination touched by the user each time, and the Internet address can be used later.

Design E is characterized in that:
a) it is only a simplest action of "tapping";
b) contents of two display screens are changed (that is, both the large display screen of the connection setup and the small display screen of the receiving setup are controlled to change), where two contents may be completely different;
c) the display screen can be designed into a curved surface display screen, as shown in FIG. 9; up until the even date, no corporation in the market is able to develop a curved surface touchscreen that can be used for mounting on a curved surface display screen, or a curved surface touch-function-built-in display screen. However, in design E where touch can occur without fingers, an action may be performed without physical contact by means of an NFC mobile device to control and change the screens of two display screens at the same time, and the two displays may be completely different, and therefore, a touch function does not need to be configured for the display screen, and the display screen may be designed to be a curved surface; and
d) a placement location of a trigger point (that is, a business logo pattern or plain text of a destination) is not limited to a layout in matrix format, but can be in any customized layout and also in a layout not in matrix format.

Because of an installing need of the touchscreen, placement of a trigger point of a conventional touch display screen is generally limited, and generally needs to be arranged in matrix format (grid). In design E, the display screen may be of a non-touch type, and a principle is that one or more NFC sensors are arranged at any location at the back of the display screen (or other appropriate locations), so as to be triggered by the receiving setup having the NFC controller. Unlike the touchscreen which has its limitation, the NFC sensor may be randomly placed, and therefore can be in any customized layout. Moreover, as described above, because no touchscreen is needed, a curved surface display screen may be used as the display screen, for example, a curved surface ultra-thin display screen. By means of interaction between the NFC controller of the receiving setup and the NFC sensor of the connection setup, when the receiving setup is close to the display screen (for example, the receiving setup is 1 to 2 cm away from the display screen), an electromagnetic wave of 13.56 MHz of the NFC controller of the receiving setup instantaneously improves signal strength, and the suddenly enhanced electromagnetic field energy sufficiently supplies energy to the NFC sensor added to the corresponding location at the back of the display screen by means of electromagnetic field coupling, so that the NFC sensor may output an instruction to the processing setup of the connection setup (for example, an external computer), and the display of the display screen correspondingly changes under control of the computer. It can be seen that, although the receiving setup does not touch but only taps above the display screen, both the large display screen of the connection setup and the small display screen of the receiving setup may be similarly controlled to change, and content of two screens may be completely different. Therefore, different from the touch display screens of the other designs, design E actually implements a "tap-driven" display screen.

In conventional positioning and navigation methods, GPS is turned on, a map is run, the name of a target shop intended to be located is input by means of handwriting/keyboard/speech, then a most appropriate one is found from a heap of data, and then navigation is performed. In contrast, in this application, as long as one or two simple actions, such as touching, tapping, and scanning is made in front of the connection setup, the following data may be accurately acquired: a map, a current location, a location of one or more destinations to be located, a path for reaching one or more destinations, a checkpoint of each path, information about a destination (for example, open time), a coupon, a photo, a video and a 360-degree panoramic scene.

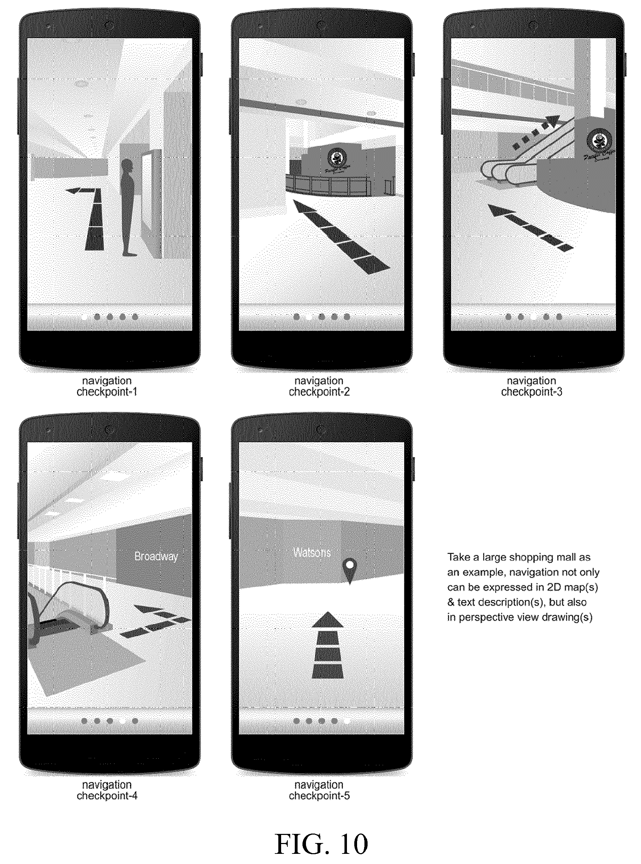

Along the path, it does not require conventional exterior positioning and navigation technologies, such as GPS, or interior positioning and navigation technologies, such as Wi-Fi hotspot positioning hardware, Bluetooth Beacon positioning hardware or VLC positioning hardware. As long as a 2-dimensional map or a perspective view that has a navigation path and a checkpoint and that is displayed on the mobile device is depended on, an effect of accurate current positioning and locating a destination and navigation can be achieved. For some people who do not well understand how to read a map (for example, people who even confound east, south, west and north), a series of steps of perspective view each of which is provided with one or more checkpoints and navigation paths are used for expression, which greatly helps these people. Referring to FIG. 10, a navigation path may have multiple navigation checkpoints, each navigation checkpoint has a corresponding perspective view, and on this account, a user may be clearly instructed to follow the path.

In the field of exterior positioning, when there are dense tall buildings and large mansions and overpasses are fully distributed, accuracy of GPS is generally in doubt. On the contrary, in this application, regardless of whether there are tall buildings and large mansions or overpasses are fully distributed, accuracy is not affected.

In the field of interior positioning, a first method is to use Wi-Fi hotspot positioning hardware. The first method performs positioning and navigation by using three steps. First, a dedicated application program installed on a mobile device is run and Wi-Fi communication on the mobile device is turned on, and when a user is located among three Wi-Fi hotspot setups, the application program can calculate distances between the user and these setups, thereby reflecting a location of the mobile device on a map, which is like a GPS system calculation method where positioning depends on three satellites. Because an inconsistent Wi-Fi coverage signal often occurs, Wi-Fi positioning accuracy is affected to an extent. On the contrary, in this application, no inconsistent coverage signal problem exists.

In the field of interior positioning, a second method is to use Bluetooth Beacon positioning hardware. The second method performs positioning and navigation by using three steps. First, a dedicated application program installed on a mobile device is run and Bluetooth communication on the mobile device is turned on, and when a user enters an effective coverage area of a Bluetooth Beacon, the Bluetooth Beacon queries whether the user wishes to connect to a Bluetooth network. Once the user connects to the Bluetooth network, over an entire path, the Bluetooth communication of the mobile device is always turned on and continuously communicates with Bluetooth Beacons along the path. Therefore, over the entire path, the user actually ceaselessly exposes oneself mobile device to all strangers who may detect existence of the user by means of a Bluetooth device, thereby exposing user privacy. On the contrary, in this application, Bluetooth communication does not need to be turned on, and user privacy is not exposed.

In the field of interior positioning, a third method is to use VLC positioning hardware. In this manner, first, LED lamps in a layout of matrix form need to be constructed in an architecture. After a user enters and turns on an installed application program, each time the user passes by right under a LED lamp (light rays irradiate perpendicularly downward), coordinate of the user is immediately reflected on a map in the application program. In this technology, for a case in which a roof of a mall has an uneven height, or a case in which a curtain wall allows sunlight to irradiate inward sometimes (notes: strong sunlight offsets luminosity of a LED lamp), it is considerable difficult to lay out VLC positioning hardware (without blind spot).

This application does not need an additional setup to perform monitoring along the path, and therefore there is no problem of an effective signal coverage area of installed positioning hardware, no problem of a signal blind spot of the installed positioning hardware, and no problem of interference to a signal of the installed positioning hardware.

In the prior art, the effective signal coverage area and the signal blind spot need to be precisely calculated in particular when an architecture is in an irregular shape, or there are many bent walkways in an architecture; it is a considerably difficult and time-consumed matter to calculate a precise layout of each setup flawlessly. Furthermore, multiple tests also need to be performed on the scene to strive to achieve the most satisfactory effect. In contrast, this application does not need precise calculation, layout or repetitive tests.

In the method of this application, a technology such as Wi-Fi hotspot positioning, Bluetooth Beacon positioning, or VLC positioning is not used, and therefore, no receiver would collect information of the user along the path, for example, sensitive data that a person once appears at a place at a time, so as to cause a problem of privacy invasion. Without collecting such sensitive data, the method can still completely achieve an effect of positioning, destination locating and navigation.

Moreover, with continuous advance of technologies, a version of one technology will naturally continuously improve with time. For example, firmware of a large quantity of Beacon setups already installed with Bluetooth 4.x is upgraded to a new version Bluetooth 5.0, so as to achieve a higher transmission speed, is understandable. However, when 4.x is compared with 5.0, it is found that an effective coverage area of Bluetooth 5.0 is four times that of Bluetooth 4.x. Therefore, it is infeasible to perform software upgrade on a large quantity of Beacon setups already installed with Bluetooth 4.x, because once comprehensive upgrading is performed, it can be foreseen that effective coverage areas of all the Beacon setups are severely overlapped thereby causing a disorder. If it is to be upgraded, the only way is to perform layout again, and a large quantity of manpower, time and money are consumed once again for design and installation. If consumption of manpower, time and money is denied, it can only retain the original transmission speed. In this application, there is no such technology upgrading problem.

This application does not require the user to log in to a local area network in advance, and therefore the user does not receive unnecessary advertisement popularization or disturbing information.

By using a large mall as an example, if a set of Wi-Fi hotspot, Bluetooth Beacon or VLC interior positioning and navigation system is to be developed, only when a large quantity of manpower, time and money are consumed, a Wi-Fi hotspot layout plan, Beacons layout plan, or VLC layout plan that may comprehensively cover each inch of channel can be calculated. In particular, when the bigger the architecture, the higher the costs because more transmitters and receivers need to be installed.

In the navigation method of this application, a technology such as Wi-Fi hotspot positioning, Bluetooth Beacon positioning, or VLC positioning is not used, and therefore, a large quantity of manpower, time or money does not need to be consumed to set up expensive setups along the path, but an effect of very accurate current positioning, destination locating and navigation can be achieved.

For the three technologies of Wi-Fi hotspot positioning, Bluetooth Beacon positioning and VLC positioning, all these setups keep contact with a mobile device in a long-time, frequent and ceaseless manner, so that an application program can obtain a current location and immediately display the current location on a map of a display screen of the mobile device. Therefore, a large quantity of power is consumed, and battery of the mobile device is exhausted quite quickly. Likewise, each Beacon operates by using a battery cell, and the battery cell can last only at most two years. Therefore, battery cell replacement is one of the problems, and the battery cell capacity of each Beacon needs to be checked once from time to time by means of software so as to ensure normal running. Otherwise, when a Beacon is out of power, navigation becomes invalid, and cannot provide location information. On the contrary, this application does not have a similar power consumption problem.

Another problem is that before these conventional interior positioning technologies are operated, an effective coverage area of each communication setup needs to be individually calibrated, which is a very time-consuming task. In contrast, this application does not need to perform calibration.

This application may also resolve a puzzle never resolved in the navigation field, that a user is navigated from an underground location to one or more destinations on the ground in a seamless handover manner. The underground is positioned by means of interior positioning, for example, Bluetooth Beacon, and the ground is generally positioned by means of exterior positioning, for example, GPS, where these two sets of systems are independently run respectively, and therefore, seamless handover cannot be implemented. This application may seamlessly hand over from the interior to the exterior.

The foregoing descriptions are merely preferred exemplary embodiments of this patent application, but are not intended to limit this patent application. Any modifications, equivalent substitutions, and improvements made within the spirit and principle of this patent application shall fall within the protection scope of this patent application.

## Claims

1. A navigation system, comprising:
a connection setup located at a predetermined place, wherein the connection setup provides different data links by means of an electronic display screen;
the connection setup determines a current location of a receiving setup engaged with the connection setup, determines a destination location requested by the receiving setup according to an operation performed by the receiving setup on the data link, and plans at least one navigation path according to the current location of and the destination location requested by the receiving setup, wherein the navigation path comprises multiple navigation checkpoints; and
the connection setup provides data of the navigation path to the receiving setup engaged with the connection setup.

2. The navigation system according to claim 1, wherein the location comprises an interior location or an exterior location.

3. The navigation system according to claim 1, wherein the operation performed by the receiving setup on the data link comprises: touching the display screen, tapping on the display screen, and scanning a QR-code on the display screen.

4. The navigation system according to claim 1, wherein the connection setup comprises at least one of a QR-code, a near field communication setup, a visible light communication setup, and an ultra-sound communication setup.

5. The navigation system according to claim 1, wherein one or more near field communication sensors are set at any location at the back of the display screen of the connection setup, so as to allow triggering by the receiving setup having a near field communication controller.

6. The navigation system according to claim 5, wherein the display screen is a curved surface ultra-thin non-touch display screen.

7. The navigation system according to claim 1, wherein the navigation path comprises a map or a perspective view of an architecture interior, or a map or a perspective view from the interior to an exterior.

8. A navigation method, comprising the following steps:
setting a connection setup at a predetermined place, wherein the connection setup provides different data links by means of an electronic display screen;
determining, by the connection setup, a current location of a receiving setup engaged with the connection setup, determining a destination location requested by the receiving setup according to an operation performed by the receiving setup on the data link, and planning at least one navigation path according to the current location of and the destination location requested by the receiving setup, wherein the navigation path comprises multiple navigation checkpoints; and
providing, by the connection setup, data of the navigation path to the receiving setup engaged with the connection setup.

9. The navigation method according to claim 8, wherein the operation performed by the receiving setup on the data link comprises: touching the display screen, tapping on the display screen, and scanning a QR-code on the display screen.

10. The navigation method according to claim 8, wherein the navigation path comprises a map or a perspective view of an architecture interior, or a map or a perspective view from the interior to an exterior.
